# EUROPEAN PATENT APPLICATION

(11) **EP 3 088 657 A1**
(43) Date of publication of application: **02.11.2016**
(21) Application number: 14873222.5
(22) Date of filing: 22.12.2014
(51) Int. Cl.: E21B 43/26

(54) **DOWNHOLE TOOL OR DOWNHOLE TOOL MEMBER, DEGRADABLE RESIN COMPOSITION, AND METHOD FOR RECOVERING HYDROCARBON RESOURCES**

(30) Priority: 26.12.2013 JP 2013268783
(71) Applicant: Kureha Corporation, Tokyo 103-8552 (JP)
(72) Inventor: TAKAHASHI, Takeo, Tokyo 103-8552 (JP); OKURA, Masayuki, Tokyo 103-8552 (JP); SAIJO, Hikaru, Tokyo 103-8552 (JP); WATANABE, Takahiro, Tokyo 103-8552 (JP); SATO, Hiroyuki, Tokyo 103-8552 (JP)
(74) Representative: Zimmermann & Partner Patentanwälte mbB
(86) International application number: PCT/JP2014/083843
(87) International publication number: WO 2015/098801

(57) **Abstract**

A downhole tool or a member thereof, preferably a ball sealer, a ball seat, a frac plug or a bridge plug, comprising a degradable resin composition containing a degradable resin and a toughness enhancing agent, in which the degradable resin composition has an izod impact strength (unnotched) of 1,000 J/m or more, a tensile elongation of 3% or more, and a tensile strength of 30 MPa or more; a degradable resin composition for a downhole tool (member) containing 60 to 99.9 mass% of the degradable resin and 0.1 to 40 mass% of the toughness enhancing agent; and a method for recovering a hydrocarbon resource using the downhole tool (member).

## Description

### Technical Field

The present invention relates to a downhole tool or a downhole tool member, a degradable resin composition for a downhole tool or a downhole tool member, and a method for recovering a hydrocarbon resource that recovers a hydrocarbon resource by producing a hydrocarbon resource such as petroleum or natural gas.

### Background Art

Hydrocarbon resources such as petroleum or natural gas have come to be produced by excavation through wells (oil wells or gas wells, also collectively referred to as "wells") having a porous and permeable subterranean formation. As energy consumption increases, deeper wells are being drilled, reaching depths greater than 9,000 m worldwide and greater than 6,000 m in Japan. In wells that are continuously excavated, the productive layer is stimulated in order to continuously excavate hydrocarbon resources efficiently from subterranean formations of which permeability has decreased over time and subterranean formations of which permeability insufficient from the beginning. Acid treatment and crushing methods are known as stimulation methods (Patent Document 1). Acid treatment is a method in which the permeability of the productive layer is increased by injecting an acid such as hydrochloric acid or hydrofluoric acid into the productive layer and dissolving the reaction components of bedrock (carbonates, clay minerals, silicates, and the like). However, various problems that accompany the use of strong acids have been identified, and increased costs, including various countermeasures, have also been pointed out. Thus, perforation for forming pores and hydraulic fracturing for forming fractures in the productive layer using fluid pressure have received attention.

Hydraulic fracturing is a method in which perforations or fractures are generated in the productive layer by fluid pressure such as water pressure (also simply called "hydraulic pressure" hereinafter). Generally, a vertical hole is drilled, and then the vertical hole is curved and a horizontal hole is drilled in a subterranean formation several thousand meters underground. Fracturing fluid is then fed into these boreholes (meaning holes provided for forming a well, also called "downholes") at high pressure, and fractures and the like are produced by the hydraulic pressure in the deep subterranean productive layer (layer that produces the hydrocarbon resource such as petroleum or natural gas), and the productive layer is thereby stimulated in order to extract and recover the hydrocarbon resource through the fractures and the like. The efficacy of hydraulic fracturing has also been examined for the development of unconventional resources such as shale oil (oil that matures in shale) and shale gas.

Fractures and the like formed by fluid pressure such as hydraulic pressure immediately close due to formation pressure when the hydraulic pressure is no longer applied. To prevent a fracture from closure, a proppant is included in the fracturing fluid (that is, the well treatment fluid used in fracturing), which is fed into the borehole at high pressure, thereby distributing the proppant in the fracture. Inorganic or organic materials are used as proppants included in fracturing fluid, but silica, alumina, and other inorganic particles have been conventionally used, and sand particles such as 20/40-mesh have been widely used because they are capable of preventing fracture closure in a very deep subterranean environment under high-temperature and high-pressure for a long time.

Various types of water-based, oil-based, and emulsion-based fluids are used as injection well treatment fluids which are fed in at high pressure, such as fracturing fluid. Because the well treatment fluid needs to have the function of transporting the proppant to the location where the fracture is generated in the borehole, it generally needs to have a prescribed viscosity, good proppant dispersibility, ease of after-treatment, and low environmental load. In addition, fracturing fluid sometimes contains a channelant in order to form flow paths through which shale oil, shale gas, and the like can pass among the proppant. Accordingly, in addition to the proppant, various additives are used in well treatment fluid, such as channelants, gelling agents, antiscale agents, acids for dissolving rock and the like, friction-reducing agents, and the like.

The following method is typically used to produce fractures and perforations by hydraulic pressure in the productive layer of a deep subterranean formation (layer that produces the hydrocarbon resource such a petroleum such as shale oil or natural gas such as shale gas) using fluid fed in at high pressure. Specifically, a prescribed section of a borehole (downhole) drilled into a subterranean formation several thousand meters deep is partially plugged while isolating sequentially from the tip portion of the borehole, and fluid is fed in at high pressure into the plugged section to produce fractures and perforations in the productive layer. Then, the next prescribed section (typically ahead of the preceding section, i.e., a segment closer to the ground surface) is plugged to produce fractures and perforations. After that, this process is repeated until the required isolation and formation of fractures and perforations have been completed.

Stimulation of the productive layer is sometimes also performed again not only for drilling of new wells but for desired sections of boreholes that have already been formed. In this case as well, the operations of borehole plugging, fracturing, and the like are similarly repeated. Additionally, there are also cases where, to perform finishing of the well, the borehole is plugged to block fluid from below, and after finishing of the top portions thereof is performed, the plugging is released. Various tools are used in order to perform the necessary operations inside newly formed boreholes and already formed boreholes, and such tools are collectively referred to as "downhole tools". In addition to being used as a general concept that includes drilling devices for performing further drilling of wells and power sources thereof, sensors and communication devices that acquire and exchange the positions and drilling information of various tools, the term downhole tool is also used as a general concept that, for example, includes downhole tool members such as plugs, which will be described later, or plug members and components.

For example, plugs (also referred to as "frac plugs", "bridge plugs", "packers", or the like) that are used in order to plug or fix boreholes are disclosed in Patent Document 2 and Patent Document 3.

For example, Patent Document 2 discloses a plug for well drilling (also referred to as a "downhole plug" hereinafter), and specifically discloses a plug comprising a mandrel (main body) having a hollow part in the axial direction, a ring or annular member along the axial direction on the outer circumferential surface that is orthogonal to the axial direction of the mandrel, a first conical member and slip, a malleable element formed from an elastomer, a rubber, or the like, a second conical member and slip, and an anti-rotation feature. The sealing of boreholes using a plug for well drilling is performed as follows. Specifically, by moving the mandrel in the axial direction thereof, as the gap between the ring or annular member and the anti-rotation feature gets smaller, the slip contacts the slanted face of the conical member, and by proceeding along the conical member, it expands radially in the outward direction, contacts the inside wall of the borehole, and is fixed in the borehole, and also, the malleable element deforms by diametric expansion, contacts the inside wall of the borehole, and seals the borehole. There is a hollow part in the axial direction of the mandrel, and a borehole is sealed by a setting ball (also referred to as a "ball sealer", and also included in the general concepts of downhole tools and downhole tool members) in the hollow part. Metal materials (aluminum, steel, stainless steel, and the like), fibers, wood, composite materials, plastics, and the like are widely exemplified as materials (the respective materials are included in the general concept of a downhole tool member) that form plugs, and composite materials containing a reinforcing material such as carbon fiber, and in particular, polymer composite materials of epoxy resin, phenol resin, and the like, are preferred, and the mandrel being formed from aluminum or a composite material is disclosed. Meanwhile, in addition to the previously described materials, the fact that it is possible to use materials that are degraded depending on temperature, pressure, pH (acidic, basic), and the like is disclosed.

Patent Document 3 discloses a disposable downhole tool or a component thereof that contains a biodegradable material that is degraded when exposed to the environment inside a well, and discloses a degradable polymer such as an aliphatic polyester such as polylactic acid as the biodegradable material. Furthermore, Patent Document 3 describes a combination of a tubular body element having a flow bore in the axial-direction, a packer element assembly comprising an upper sealing element, a central sealing element, and a lower sealing element along the axial direction on the outer circumferential surface that is orthogonal to the axial direction of the tubular body element, a slip, and a mechanical slip body. Furthermore, Patent Document 3 discloses that fluid flow in only one direction is allowed due to the fact that a ball is set in the flow bore of the tubular body element.

Plugs that are used in well drilling, sealers and other downhole tool and downhole tool members are arranged sequentially inside a well until the well is completed, but need to be removed at a stage at which the production of petroleum such as shale oil or natural gas such as shale gas (hereinafter collectively referred to as "petroleum and natural gas" or "petroleum or natural gas") is initiated. Since downhole tools and downhole tool members such as plugs are typically not designed to be recoverable after use and release of plugging, such members are removed by destruction or fragmenting using milling, drilling out, or another method. However, substantial costs and time are required for milling, drilling out, and the like. There are also plugs specially designed to be retrievable after use (retrievable plugs), but since plugs are placed deep underground, substantial cost and time are required to retrieve all of them. In such an instance, various improvements in the use of degradable materials as downhole tool or downhole tool members are currently being tested.

Patent Document 4 discloses a degradable ball sealer (equivalent to a downhole tool or a downhole tool member) that blocks perforations inside a casing that is provided inside a downhole. More specifically, Patent Document 4 discloses a ball sealer that is practically insoluble in well fluid, is degraded into an oligomer in the presence of water at subterranean formation temperatures, and is formed from a polyester such as a polylactic acid or a lactic acid-glycolic acid copolymer that is soluble in subterranean formation fluid.

Furthermore, Patent Document 5 discloses a composition for balls that is degraded, dissolved, becomes separated or in which the physical properties thereof deteriorate significantly over time in the presence of hydrocarbons and subterranean heat. More specifically, Patent Document 5 discloses a combination of a ball (equivalent to a downhole tool or a downhole tool member), which is placed inside a sleeve that is capable of sliding between a first position and a second position inside a pipe, and which includes a material that is degraded at temperatures that exceed 65.6°C (equivalent to 150°F), and a ball seat (equivalent to a downhole tool or a downhole tool member) having an opening with a smaller diameter than that of the ball, and further discloses that the material of the ball that is degraded at temperatures that exceed 65.6°C is a thermosetting polymer, a thermoplastic polymer, an elastomer, or the like, and may further include fibers or particles such as an aramid, a glass, carbon, boron, a polyester, a cotton, or a ceramic.

In the abovementioned manner, due to increased demand for securing energy resources, environmental protection and the like, in particular, as the excavation of unconventional resources expands, excavation conditions are becoming increasingly severe, such as increased depth. Furthermore, as shown by a diversification in temperature conditions from approximately 60°C to approximately 200°C that accompanies a diversification in depth, excavation conditions are becoming more diverse. In other words, various properties are required for downhole tools and downhole tool members of plugs such as frac plugs, bridge plugs and packers, balls and ball seats. These properties include mechanical strength (tensile strength, compression tensile elongation, and the like) to allow a material to be transported to a depth of several thousand meters underground; oil-resistance, water-resistance, and heat-resistance such that mechanical strength and the like are maintained when coming into contact with a hydrocarbon resource to be recovered in the high-temperature and high-humidity environment of a deep subterranean downhole; seal performance and mechanical strength such that plugging can be maintained due to high hydraulic pressure when plugging a downhole for perforation and fracturing; and the like. Additionally, a characteristic of being easily removable under the environmental conditions of such a well (as described above, there are diverse environments with regard to temperature conditions and other conditions that accompany the diversification in depth) at a stage at which a well for hydrocarbon resource recovery has been completed, has also come to be required.

Additionally, in a degradable downhole tool or a downhole tool member for hydrocarbon resource recovery (hereinafter, also referred to as a "degradable downhole tool or a members thereof"), the practical use of which is currently in demand, it has been discovered that since the use of a downhole tool or downhole tool member is a well treatment process performed in a variety of environments in addition to deep environments, and various other members that are formed from a variety of materials including metals are used inside downholes, depending on the use environment, a degradable downhole tool or a member thereof, and other various members are subjected to collisions and contact, and there is a concern that a degradable downhole tool or a member thereof will fracture, be destroyed, break, or the like due to impacts at such times. Therefore, depending on the use environment and the type of tool, a shock-resistant degradable downhole tool or a member thereof has come into demand, and materials that can combine excellent mechanical properties including shock-resistance and degradability have come into demand as a resin composition for a downhole tool or a downhole tool member that form the downhole tool or downhole tool member.

In other words, under severe and various excavation conditions, such as increased depth, a downhole tool or a downhole tool member and a resin composition for a downhole tool or a downhole tool member used in a method for recovering a hydrocarbon resource that have sufficient mechanical strength (tensile strength, compression tensile elongation and the like), have a degree of shock resistance at which it is difficult to cause damage thereto even if there is contact or a collision with the various members that are used in well drilling, removal of which is easy in the environmental conditions of a variety of wells, and that contribute to a reduction in cost and a shortening of processes of well drilling, are in demand.

### Citation List

### Patent Literature

Patent Document 1: Japanese Unexamined Patent Application Publication No. 2003-533619A (corresponding to US Patent Application Publication No. 2003/0060375 specification)
Patent Document 2: US Patent Application Publication No. 2011/0277989 A1 specification
Patent Document 3: US Patent Application Publication No. 2005/0205266 A1 specification
Patent Document 4: US Patent No. 4716964B Specification
Patent Document 5: US Patent Application Publication No. 2012/0181032 A1 specification

### Summary of Invention

### Technical Problem

An object of the present invention is to provide a downhole tool or a downhole tool member used in a method for recovering a hydrocarbon resource that, in addition to having sufficient mechanical strength (tensile strength, compression tensile elongation and the like) under severe and various excavation conditions such as increased depth, have a high degree of shock resistance at which it is difficult to cause damage thereto even if there is contact or a collision with the various members that are used in well drilling, removal of which is easy in the environmental conditions of a variety of wells as necessary, and that contribute to a reduction in cost and a shortening of processes of well drilling. Another object of the present invention is to provide a resin composition for a downhole tool or a downhole tool member from which it is easily possible to obtain the downhole tool or downhole tool member, and to provide a method for recovering a hydrocarbon resource that uses the downhole tool or downhole tool member.

### Solution to Problem

As a result of diligent research into solving the problems, the present inventors discovered that it is possible to solve the technical problems by incorporating a toughness enhancing agent in a degradable resin so as to be uniformly dispersed, and setting a downhole tool or a downhole tool member comprising a characteristic degradable resin composition having predetermined characteristics in addition to toughness, thereby completing the present invention.

According to the present invention, a downhole tool or a downhole tool member comprising a degradable resin composition containing a degradable resin and a toughness enhancing agent, in which the degradable resin composition has an izod impact strength (unnotched) of 1,000 J/m or more, a tensile elongation of 3% or more, and a tensile strength of 30 MPa or more, is provided.

In addition, according to the present invention, the following downhole tools or downhole tool members (hereinafter, also referred to as a "downhole tool or a member thereof") of (1) to (4) are provided as specific aspects of the present invention.

(1) A downhole tool or a member thereof comprising a degradable resin composition containing 60 to 99.9 mass% of a degradable resin and 0.1 to 40 mass% of a toughness enhancing agent when a total of the degradable resin and the toughness enhancing agent is set as 100 mass%.
(2) A downhole tool or a member thereof further comprising a chain extender, in which the downhole tool or a member thereof contains a degradable resin composition containing 60 mass% or more and less than 98.8 mass% of the degradable resin, more than 1 mass% and 37 mass% or less of the toughness enhancing agent, and 0.2 mass% or more and 3 mass% or less of the chain extender when a total of the degradable resin, the toughness enhancing agent and the chain extender is set as 100 mass%.
(3) A downhole tool or a member thereof further comprising a reinforcing material, in which the downhole tool or a member thereof contains a degradable resin composition containing 60 mass% or more and less than 94 mass% of the degradable resin, more than 1 mass% and 30 mass% or less of the toughness enhancing agent, and 5 mass% or more and 39 mass% or less of the reinforcing material when a total of the degradable resin, the toughness enhancing agent and the reinforcing material is set as 100 mass%.
(4) A downhole tool or a member thereof, in which the downhole tool or a member thereof is selected from the group consisting of a ball sealer, a ball seat, a frac plug and a bridge plug.

Furthermore, according to the present invention, a degradable resin composition for a downhole tool or a member thereof, in which the degradable resin composition contains 60 to 99.9 mass% of a degradable resin and 0.1 to 40 mass% of a toughness enhancing agent when a total of the degradable resin and the toughness enhancing agent is set as 100 mass%, and has an izod impact strength (unnotched) of 1,000 J/m or more, a tensile elongation of 3% or more, and a tensile strength of 30 MPa or more, is provided.

In addition, according to the present invention, the following degradable resin compositions for a downhole tool or a member thereof of the (i) to (vii) are provided as specific aspects of the invention of the degradable resin composition for a downhole tool or a member thereof.

(i) The degradable resin composition for a downhole tool or a member thereof in which the degradable resin is an aliphatic polyester.
(ii) The degradable resin composition for a downhole tool or a member thereof in which the degradable resin is a polyglycolic acid.
(iii) The degradable resin composition for a downhole tool or a member thereof in which the toughness enhancing agent contains a thermoplastic elastomer.
(iv) The degradable resin composition for a downhole tool or a member thereof in which the thermoplastic elastomer is a thermoplastic polyester elastomer.
(v) The degradable resin composition for a downhole tool or a member thereof in which the thermoplastic polyester elastomer is a polyester-polyether block copolymer or an aromatic polyester-aliphatic polyester block copolymer.
(vi) The degradable resin composition for a downhole tool or a member thereof further comprising a chain extender, in which the degradable resin composition contains 60 mass% or more and less than 98.8 mass% of the degradable resin, more than 1 mass% and 37 mass% or less of the toughness enhancing agent, and 0.2 mass% or more and 3 mass% or less of the chain extender when a total of the degradable resin, the toughness enhancing agent and the chain extender is set as 100 mass%.
(vii) A degradable resin composition for a downhole tool or a member thereof further comprising a reinforcing material, in which the degradable resin composition contains 60 mass% or more and less than 94 mass% of the degradable resin, more than 1 mass% and 30 mass% or less of the toughness enhancing agent, and 5 mass% or more and 39 mass% or less of the reinforcing material when a total of the degradable resin, the toughness enhancing agent and the reinforcing material is set as 100 mass%.

In addition, according to the present invention, a method for recovering a hydrocarbon resource using the downhole tool or a member thereof is further provided.

### Advantageous Effects of Invention

According to the present invention, a downhole tool or a member thereof comprising a degradable resin composition containing a degradable resin and a toughness enhancing agent, in which the degradable resin composition has an izod impact strength (unnotched) of 1,000 J/m or more, a tensile elongation of 3% or more, and a tensile strength of 30 MPa or more, is provided. Due to the above features, the present invention can exhibit an effect of it being possible to provide a downhole tool or a member thereof used in a method for recovering a hydrocarbon resource that, under severe and various excavation conditions such as increased depth, has sufficient tensile characteristics, has, due to the toughness that is represented by extremely high izod impact strength (unnotched), a high degree of shock resistance at which it is difficult to cause damage thereto even if there is contact or a collision with the various members that are used in well drilling, that facilitates removal of the tool or the member in the environmental conditions of a variety of wells as necessary, and that contributes to a reduction in cost and a shortening of processes of well drilling, is exhibited.

In addition, according to the present invention, a degradable resin composition for a downhole tool or a member thereof comprising 60 to 99.9 mass% of a degradable resin and 0.1 to 40 mass% of a toughness enhancing agent when a total of the degradable resin and the toughness enhancing agent is set as 100 mass%, in which the degradable resin composition has an izod impact strength (unnotched) of 1,000 J/m or more, a tensile elongation of 3% or more, and a tensile strength of 30 MPa or more, is provided. Due to the above features, the present invention can exhibit an effect of providing a degradable resin composition for a downhole tool or a member thereof from which it is easily possible to obtain the downhole tool or downhole tool member.

In addition, according to the present invention, a method for recovering a hydrocarbon resource using the downhole tool or member thereof, is provided. As a result of the method, an effect of providing a method for recovering a hydrocarbon resource that, under severe and various excavation conditions such as increased depth, has sufficient tensile characteristics, that has, due to the toughness that is represented by extremely high izod impact strength (unnotched), a high degree of shock resistance at which it is difficult to cause damage thereto even if there is contact or a collision with the various members that are used in well drilling, that facilitates removal of the tool or the member in the environmental conditions of a variety of wells as necessary, and that contributes to a reduction in cost and a shortening of processes of well drilling, is exhibited.

### Brief Description of Drawings

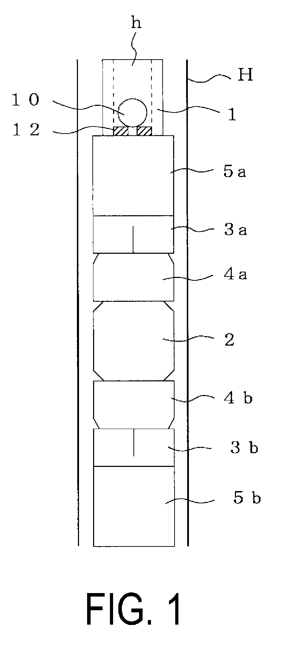

FIG. 1 is a schematic view that illustrates a specific example of a downhole tool of the present invention.

### Description of Embodiments

### I. Downhole Tool or Downhole Tool Member

A downhole tool or a member thereof of the present invention is a downhole tool or a member thereof comprising a degradable resin composition containing a degradable resin and a toughness enhancing agent, in which the degradable resin composition has an izod impact strength (unnotched) of 1,000 J/m or more, a tensile elongation of 3% or more, and a tensile strength of 30 MPa or more.

### 1. Degradable resin

The degradable resin contained in the degradable resin composition that forms the downhole tool or a member thereof of the present invention may be a degradable resin that is, for example, a biodegradable resin, which is degraded by microorganisms in the soil in which a fracturing fluid and the like are used, or a hydrolyzable resin, which is degraded by a solvent such as a fracturing fluid, or by water in particular, or by an acid or an alkali as desired. Additionally, the degradable resin may be a degradable resin that can be degraded by another method, for example, chemically using heating conditions of a predetermined temperature or more. It is preferable that the degradable resin is a hydrolyzable material that is degraded by water of a predetermined temperature or more. Furthermore, resins of which the intrinsic strength of resin decreases and the resin becomes weak due to a reduction in the degree of polymerization or the like, resulting in the material disintegrating and losing the shape thereof (hereinafter, also referred to as "disintegrability") when a very small mechanical force is applied thereto, also qualify as degradable resins.

For example, in the downhole tool or member thereof of the present invention, excellent mechanical properties including shock resistance, and excellent degradability are simultaneously required in products in severe and diverse environments such as the deep subterranean high temperature and high pressure environments. Accordingly, from the above-mentioned viewpoint, examples of the degradable resin include aliphatic polyesters such as polylactic acid (PLA), polyglycolic acid (PGA), and poly-ε-caprolactone (PCL), and polyvinyl alcohols (partially saponified polyvinyl alcohols and the like having a degree of saponification of 80 to 95 mol%, and the like) and the like, but the degradable resin is more preferably an aliphatic polyester. In addition, components that form an aromatic polyester such as terephthalic acid may be used in combination provided that the properties as a degradable resin are not lost. The degradable resin may be one type alone or a combination obtained by blending two or more types.

From the viewpoint of excellent mechanical properties including shock resistance and degradability that are required in such a downhole tool or a member thereof, an aliphatic polyester is most preferably at least one type selected from the group consisting of PGA, PLA, and a glycolic acid-lactic acid copolymer (PGLA), and PGA is still more preferable. In other words, it is most preferable that the degradable resin is PGA. Furthermore, in addition to homopolymers of glycolic acid, PGA also includes copolymers containing 50 mass% or more, preferably 75 mass% or more, more preferably 85 mass% or more, still more preferably 90 mass% or more, particularly preferably 95 mass% or more, most preferably 99 mass% or more, and above all, preferably 99.5 mass% or more, of glycolic acid repeating units. Furthermore, in addition to homopolymers of L-lactic acid or D-lactic acid, PLA also includes copolymers containing 50 mass% or more, preferably 75 mass% or more, more preferably 85 mass% or more, and still more preferably 90 mass% or more, of L-lactic acid or D-lactic acid repeating units, and furthermore, may be a stereocomplex polylactic acid for which the fact that the heat resistance thereof is increased, is known, which is obtained by forming a stereocomplex in which the respective molecular chains are suitably entwined by mixing a poly-L-lactic acid and a poly-D-lactic acid. As the PGLA, a copolymer in which the ratio (mass ratio) of glycolic acid repeating units to lactic acid repeating units is from 99:1 to 1:99, preferably from 90:10 to 10:90, and more preferably from 80:20 to 20:80, may be used.

The content of the degradable resin in the degradable resin composition for a downhole tool or a member thereof can be set as appropriate in consideration of shock resistance and tensile characteristics that are required in the downhole tool or the member thereof, the ease of removal thereof after well drilling according to necessity, and the like. However, when the total of the degradable resin and the toughness enhancing agent is set to 100 mass%, the content is preferably 60 to 99.9 mass%, more preferably 62 to 99.8 mass%, and still more preferably 65 to 99.5 mass%, and depending on combinations of the toughness enhancing agent, and a chain extender or reinforcing material, which will be described later, the content may be 68 to 99.2 mass%, 75 to 99 mass% or 85 to 98 mass% depending on the particular case.

### 2. Toughness enhancing agent

In addition to the degradable resin, the degradable resin composition that forms the downhole tool or the member thereof of the present invention contains a toughness enhancing agent. As a result of a degradable resin composition for a downhole tool or a member thereof of the present invention containing a toughness enhancing agent in addition to the degradable resin, the degradable resin composition combines excellent toughness with sufficient tensile characteristics and degradability. As a result of this, it is possible to form a downhole tool or a member thereof that has a high degree of shock resistance at which it is difficult to cause damage thereto even if there is contact or a collision with the various members that are used in well drilling.

The composition (the type and material) and the form of the toughness enhancing agent are not particularly limited as long as the toughness enhancing agent improves the shock resistance as a result of enhancing the toughness of the degradable resin composition, and more specifically, as long as the toughness enhancing agent can provide a degradable resin composition having an izod impact strength (unnotched) of 1,000 J/m or more, a tensile elongation of 3% or more, and a tensile strength of 30 MPa or more. For example, forms of the toughness enhancing agent include a granular toughness enhancing agent and/or a fibrous toughness enhancing agent, and it is possible to select the shape and size (the particle diameter and particle size distribution, fiber diameter and fiber length, or the like) thereof as appropriate.

The composition of the toughness enhancing agent is an elastic material, and various rubber materials and elastomer materials can be included as examples thereof. More specifically, examples include natural rubbers or synthetic rubbers such as a natural rubber, an isoprene rubber, an ethylene propylene rubber, a butyl rubber, a styrene-butadiene rubber, an acrylic rubber, an aliphatic polyester rubber, a chloroprene rubber, or a polyurethane rubber; a thermoplastic elastomer such as a thermoplastic olefin elastomer (an ethylene-propylene copolymer, or an ethylene-vinyl acetate copolymer), a thermoplastic polyester elastomer (an aromatic polyester-aliphatic polyester block copolymer, a polyester-polyether block copolymer, or the like), a thermoplastic polyurethane elastomer, a styrene-butadiene-styrene block copolymer, a styren-based thermoplastic elastomer such as a styrene-ethylene/butylene-styrene block copolymer (SEBS), or a multi-layered polymer containing a soft component phase such as rubber in a hard component phase of a methacrylate-based resin; and the like. Furthermore, a degradable rubber material or elastomer material that is biodegradable, hydrolyzable or can be chemically degraded by any other method is preferable, and in addition to an aliphatic polyester rubber, a polyurethane rubber, a natural rubber, and an isoprene rubber, examples thereof include a rubber material or an elastomer material having a hydrolyzable functional group, and the like.

### Thermoplastic elastomer

As the toughness enhancing agent, from viewpoints of being able to realize high shock resistance and being able to improve on the sufficient tensile characteristics and degradability in a balanced manner in the obtained downhole tool or the member thereof of the present invention as a result of the enhancement in toughness, or more specifically, as a result of the enhancement in the izod impact strength (unnotched), and the formation workability, and ease of disposal and recovery of the downhole tool or the member thereof, a thermoplastic elastomer is preferable, and a thermoplastic polyester elastomer is more preferable.

Examples of the thermoplastic polyester elastomer include block copolymers that contain aromatic polyester units such as polybutylene terephthalate as a hard segment, and contain aliphatic polyether units as a soft segment, that is, polyester-polyether block copolymers, block copolymers that contain aliphatic polyester units as a soft segment, that is, aromatic polyester-aliphatic polyester block copolymers, and the like, and polyester-polyether block copolymers are more preferable.

### Other degradable resins

In addition, it is possible to use other degradable resins as the composition of the toughness enhancing agent. It is possible to incorporate a different degradable resin to the degradable resin, which forms the main part of the degradable resin composition for a downhole tool or a member thereof according to the present invention, and which is preferably incorporated at a range of 60 to 99.9 mass% (when the total of the degradable resin and the toughness enhancing agent are set to 100 mass%), as the toughness enhancing agent. For example, by incorporating PLA, as a different degradable resin to PGA, which is the preferred degradable resin, as the toughness enhancing agent, it is possible to realize high shock resistance and to improve on the sufficient tensile characteristics and degradability in a balanced manner as a result of the enhancement in toughness, or more specifically, as a result of the enhancement in the izod impact strength (unnotched).

### Form of toughness enhancing agent

In addition, from viewpoints of the effect of the toughness enhancement and uniform dispersibility of the degradable resin, the form or shape of the toughness enhancing agent in the degradable resin composition for a downhole tool or a member thereof, is preferably a particulate form, and among particulate forms, a spherical form, and the particle diameter (indicates the average particle diameter of 100 particles measured by electron microscope observation of the cross sections thereof) is preferably 1 nm to 10 µm, more preferably 5 nm to 5 µm, and still more preferably 10 nm to 2 µm. It is preferable that the toughness enhancing agent be dispersed finely in island form in the degradable resin composition with a particulate form or a spherical form, since as a result of this, in addition to the enhancement in the toughness of the degradable resin due to the toughness enhancing agent being large, remaining toughness enhancing agent is easily recovered in fluid at a time of removal of a downhole tool or a member thereof, and it is difficult for the remaining toughness enhancing agent to remain inside a downhole.

### Content of toughness enhancing agent

The content of the toughness enhancing agent in the degradable resin composition for a downhole tool or a member thereof can be set as appropriate in consideration of shock resistance and tensile characteristics that are required in the downhole tool or the member thereof, the ease of removal thereof after well drilling according to necessity, and the like. However, when the total of the degradable resin and the toughness enhancing agent is set to 100 mass%, the content is preferably 0.1 to 40 mass%, more preferably 0.2 to 38 mass%, and still more preferably 0.5 to 35 mass%, and depending on combinations of the degradable resin, the toughness enhancing agent, and a chain extender or reinforcing material, which will be described later, the content may be 0.8 to 32 mass%, 1 to 25 mass% or 2 to 15 mass% depending on the particular case. The toughness enhancing agent may contain a single type or may contain a combination of two or more types.

### 3. Other blended components

The degradable resin composition for a downhole tool or a member thereof of the present invention has excellent toughness, tensile characteristics and degradability as a result of incorporating a degradable resin and a toughness enhancing agent, but, within a range that does not obstruct the object of the present invention, may incorporate various additives such as a chain extender, a stabilizer, degradation accelerator, a degradation inhibitor, a reinforcing material, or the like, or other resin materials as other blended components. For example, it is preferable that the degradable resin composition further contain a chain extender, since as a result of this, the molecular weight of the degradable resin is increased, and the shock resistance, or more specifically, the izod impact strength (unnotched) is enhanced, and the izod impact strength (notched) is also enhanced in some cases. In addition, the degradable resin composition can further contain a reinforcing material, and in such a case, the degradable resin composition forms a degradable resin composite material, and therefore, the mechanical properties such as the tensile characteristics thereof are enhanced.

### Chain extender

As a chain extender, it is possible to use a conventional compound that is used as a chain extender of a degradable resin, and examples thereof include an oxazoline compound, an isocyanate compound, a carbodiimide compound, a carbodiimide-modified isocyanate compound, a fatty acid bisamide compound, an alkyl substituted fatty acid monoamide compound, a 1-3 functional glycidyl-modified compound having a triazine backbone, an epoxy compound, an acid anhydride, an oxazine compound, a ketene compound, and the like, and it is possible to incorporate a single type or a combination of two or more types. From viewpoints of being able to realize high shock resistance and being able to improve on the sufficient tensile characteristics and degradability in a balanced manner as a result of the enhancement in toughness, or more specifically, as a result of the enhancement in the izod impact strength (unnotched), an oxazoline compound and an isocyanate compound are preferable.

As an oxazoline compound, a compound having two or more oxazoline rings in the molecule thereof can be used, and examples thereof include 2,2'-bis-(2-oxazoline) compounds such as 2,2'-m-phenylene-bis-(2-oxazoline) [1,3-PBO : also referred to as "2,2'-(1,3-phenylene)bis(2-oxazoline)"], 2,2'-bis-(2-oxazoline), 2,2'-methylene-bis-(2-oxazoline), 2,2'-ethylene-bis-(2-oxazoline), 2,2'-trimethylene-bis-(2-oxazoline), 2,2'-tetramethylene-bis-(2-oxazoline), 2,2'-hexamethylene-bis-(2-oxazoline), 2,2'-octamethylene-bis-(2-oxazoline), 2,2'-ethylene-bis-(4,4'-dimethyl-2-oxazoline), 2,2'-p-phenylene-bis-(2-oxazoline), and 2,2'-m-phenylene-bis-(4,4'-dimethyl-2-oxazoline); bis-(2-oxazolinyl cyclohexane) sulfide, bis-(2-oxazolinyl norbornane) sulfide, a polymer compound in which two or more oxazoline ring structures are introduced at the molecular chain terminals or side chains thereof, or the like, and 1,3-PBO is particularly preferable. As an isocyanate compound, aromatic diisocyanates having from 6 to 20 carbons (not including the carbons of NCO groups, the same applies hereinafter), aliphatic diisocyanates having from 2 to 18 carbons, alicyclic diisocyanates having from 4 to 15 carbons, aromatic aliphatic diisocyanates having from 8 to 15 carbons, modified products of these diisocyanates and mixed compounds of two or more types of these, can be used. Specific examples of isocyanates include phenylene diisocyanate, tolylene diisocyanate (TDI), diphenyl methane diisocyanate (MDI), naphthylene diisocyanate, ethylene diisocyanate, hexamethylene diisocyanate (HDI), isophorone diisocyanate (IPDI), xylylene diisocyanate (XDI), lysine triisocyanate, and the like, and xylylene diisocyanate (XDI) is particularly preferable.

In a case in which a chain extender is further contained, it is preferable that the degradable resin composition for a downhole tool or a member thereof of the present invention contain 60 mass% or more and less than 98.8 mass% of the degradable resin, more than 1 mass% and 37 mass% or less of the toughness enhancing agent, and 0.2 mass% or more and 3 mass% or less of the chain extender when a total of the degradable resin, the toughness enhancing agent and the chain extender is set as 100 mass%. The content of the chain extender is preferably in a range of 0.23 to 2.5 mass%, and more preferably 0.26 to 2 mass%.

### Reinforcing material

As a reinforcing material, materials such as a conventional material that is used as a reinforcing material of a resin material or the like with the objective of enhancing the mechanical strength or heat resistance thereof may be used, and a fibrous reinforcing material or a particulate form or powder form reinforcing material may be used. Additionally, there are cases in which a fibrous reinforcing material or a particulate form or powder form reinforcing material shares the composition with a fibrous toughness enhancing agent or particulate form toughness enhancing agent that is contained in the degradable resin composition for the downhole tool or the member thereof of the present invention, but normally, it is possible to discriminate between such a reinforcing material and the toughness enhancing agent based on the shape and size thereof. Additionally, as described above, a particulate form toughness enhancing agent, or preferably a particulate form toughness enhancing agent that contains at least one of a thermoplastic elastomer or another degradable resin may also further contain a reinforcing material.

Examples of fibrous reinforcing materials include inorganic fibrous substances such as glass fibers, carbon fibers, asbestos fibers, silica fibers, alumina fibers, zirconia fibers, boron nitride fibers, silicon nitride fibers, boron fibers, and potassium titanate fibers; metal fibrous substances such as stainless steel, aluminum, titanium, steel, and brass; high strength and high elasticity fibres such as aramid fibers, PBO fibers, and ultra high molecular weight polyethylene fibres; kenaf fibers; organic fibrous substances with high melting points such as polyamides, fluorine resins, polyesters, and acrylic resins; and the like. Short fibers having a length of 10 mm or less, more preferably 1 to 6 mm, and still more preferably 1.5 to 4 mm are used as the fibrous reinforcing materials. Furthermore, inorganic fibrous substances are preferably used, and glass fibers are particularly preferable.

As the particulate form or powder form reinforcing material, mica, silica, talc, alumina, kaolin, calcium sulfate, calcium carbonate, titanium oxide, ferrite, clay, glass powder, milled fibers, zinc oxide, nickel carbonate, iron oxide, quartz powder, magnesium carbonate, barium sulfate, and the like can be used. The particle diameter of the particulate form or powder form reinforcing materials is normally 0.01 to 1,000 µm, preferably 0.05 to 500 µm, and more preferably 0.1 to 200 µm.

In a case in which a reinforcing material is further contained, it is preferable that the degradable resin composition for a downhole tool or a member thereof of the present invention contain 60 mass% or more and less than 94 mass% of the degradable resin, more than 1 mass% and 30 mass% or less of the toughness enhancing agent, and 5 mass% or more and 39 mass% or less of the reinforcing material when a total of the degradable resin, the toughness enhancing agent and the reinforcing material is set as 100 mass%. The content of the reinforcing material is preferably in a range of 10 to 35 mass%, and more preferably 15 to 30 mass%. The reinforcing material may use a single type or may use a combination of two or more types. The reinforcing material may be treated with a sizing agent or surface treatment agent as necessary.

### 4. Degradable resin composition and mechanical properties of degradable resin composition

The degradable resin composition for a downhole tool or a member thereof of the present invention contains 60 to 99.9 mass% of a degradable resin and 0.1 to 40 mass% of a toughness enhancing agent when a total of the degradable resin and the toughness enhancing agent is set as 100 mass%, and has an izod impact strength (unnotched) of 1,000 J/m or more, a tensile elongation of 3% or more, and a tensile strength of 30 MPa or more. As a result of the degradable resin composition for the downhole tool or the member thereof of the present invention having the above-mentioned composition, and mechanical properties that include a high izod impact strength (unnotched) in a predetermined range and tensile characteristics, the composition has toughness that is represented by extremely high izod impact strength (unnotched) in addition to sufficient tensile characteristics and degradability. This makes it possible to form a downhole tool or a member thereof in which it is difficult to cause damage thereto even if there is contact or a collision with the various members that are used in well drilling. Additionally, depending on type and use mode of the downhole tool or a member thereof, it is possible to evaluate the mechanical properties thereof using the compression characteristics (the compression strength, or the like) thereof in place of the tensile characteristics. Hereinafter, measurement methods and evaluation methods of the mechanical properties will be described.

### Izod impact strength (unnotched)

The degradable resin composition for a downhole tool or a member thereof of the present invention has an izod impact strength (unnotched) of 1,000 J/m or more. Izod impact strength (unnotched) is measured for unnotched test samples in accordance with ASTM D256 (corresponding to ISO 180). This indicates the izod impact strength (average value of n = 5 Unit: J/m) calculated by measuring the impact energy that is absorbed during destruction of unnotched test samples at ambient temperature (a temperature of 23°C ± 1°C) using a pendulum impact test machine for rectangular test samples (unnotched) with a length of 63.5 mm, a width of 12.7 mm and a thickness of 3.0 mm that are prepared in accordance with the regulations of ASTM D256. If the izod impact strength (unnotched) of the degradable resin composition for a downhole tool or a member thereof is less than 1,000 J/m, the toughness thereof is insufficient, and therefore, fracture, destruction, or breakage occurs in cases in which the downhole tool or a member thereof comes into contact with or collides with the various members that are used in well drilling. More specifically, for example, there is a concern that 1) a downhole tool or a member thereof such as a ball will be destroyed or dented (notched) when moving at high speed, 2) a ball will be destroyed as a result of being subjected to an impact during movement of the ball, or during setting of the ball in a ball seat (a downhole tool member) (at this time, if a notch is formed in 1), it is more likely that the ball will be destroyed as a result of the impact strength at this stage becoming a notched impact strength which is significantly smaller than an unnotched impact strength), and 3) a ball will become fractured or destroyed by the pressure that is applied when setting the ball in a ball seat as a result of there being dents and breaks. From a viewpoint of preventing destruction in loading at high-speed and the like, the izod impact strength (unnotched) of the degradable resin composition for a downhole tool or a member thereof of the present invention is preferably 1,050 J/m or more, and more preferably 1,100 J/m or more. In many cases, the degradable resin composition for a downhole tool or a member thereof of the present invention has an izod impact strength (unnotched) of 2.5 times or more, and preferably 3 times or more than that of a degradable resin composition that contains the same degradable resin but does not contain the toughness enhancing agent, and as a result of this, has excellent shock resistance. The izod impact strength (unnotched) of the degradable resin composition for a downhole tool or a member thereof does not have an upper limit value in particular, but is generally 4,000 J/m or less, and is generally 11 times or less than that of a degradable resin composition that does not contain the toughness enhancing agent. In addition, since the izod impact strength (unnotched) of the degradable resin composition for a downhole tool or a member thereof of the present invention is 15 times or more, preferably 18 times or more, and 20 times or more depending on the composition, the size of the izod impact strength (notched), which will be described next. Thus, in a case in which there is contact or a collision with the various members that are used in well drilling, it is extremely difficult for fractures, destruction or breakages to occur. Additionally, there is no particular upper limit to the multiplication factor of the size, but 80 times is normal, and in most cases the upper limit is 50 times.

### Izod impact strength (notched)

Additionally, the izod impact strength (average value of n = 5 Unit: J/m) of the degradable resin composition for a downhole tool or a member thereof of the present invention calculated by measuring the impact energy that is absorbed during destruction of notched test samples at ambient temperature (a temperature of 23°C ± 1°C) using a pendulum impact test machine for test samples with the above-mentioned shape that are prepared in accordance with the regulations of ASTM D256 [hereinafter, also referred to as the "izod impact strength (notched)"], is preferably 20 J/m or more, more preferably 25 J/m or more, and still more preferably 30 J/m or more. The izod impact strength (notched) does not have an upper limit value in particular, but is generally 400 J/m or less.

### Tensile elongation

The degradable resin composition for a downhole tool or a member thereof of the present invention has a tensile elongation of 3% or more. The tensile elongation of the degradable resin composition for a downhole tool or a member thereof can be measured in accordance with JIS K7113. The tensile elongation is calculated by performing a tensile test at a speed of 50 mm/min at ambient temperature (a temperature of 23°C ± 1°C) for test samples (test samples No. 1) that are prepared in accordance with the regulations of JIS K7113, and measuring the elongation at the time of breakage of the test samples (average value of n = 5 Unit: %). If the tensile elongation of the degradable resin composition for a downhole tool or a member thereof is less than 3%, there is a concern that the downhole tool or a member thereof will become fractured, destroyed or broken when disposing the downhole tool or a member thereof inside a borehole, which is in a deep subterranean high-temperature environment, or performing perforation or fracturing. From a viewpoint of the above-mentioned functional expression, the tensile elongation of the degradable resin composition for a downhole tool or a member thereof is preferably 4% or more, more preferably 5% or more, and still more preferably 6% or more. The tensile elongation does not have an upper limit value in particular, but is generally 60%.

### Tensile strength

The degradable resin composition for a downhole tool or a member thereof of the present invention has a tensile strength of 30 Mpa or more. The tensile strength of the degradable resin composition for a downhole tool or a member thereof can be measured in accordance with JIS K7113. The tensile strength is calculated by performing a tensile test at a speed of 50 mm/minute at ambient temperature (a temperature of 23°C ± 1°C) for test samples (test samples No. 1) that are prepared in accordance with the regulations of JIS K7113, and measuring the tensile stress at the time of breakage of the test samples (average value of n = 5 Unit: MPa). If the tensile strength of the degradable resin composition for a downhole tool or a member thereof is less than 30 MPa, the tensile characteristics will be insufficient as a downhole tool or a member thereof. Thus, there is a concern that the degradable resin composition will not be able to sufficiently exhibit the function thereof in a case in which the tension thereof during operation in a mandrel for a frac plug, and pressure resistance during isolation with a ball sealer will be insufficient, or the like. From a viewpoint of the above-mentioned functional expression, the tensile strength of the degradable resin composition for a downhole tool or a member thereof is preferably 50 MPa or more, more preferably 70 MPa or more, and still more preferably 80 MPa or more. The tensile strength does not have an upper limit value in particular, but is generally 500 MPa or less.

### 5. Downhole tool or downhole tool member

In addition to having sufficient mechanical strength under severe and various excavation conditions such as increased depth, a downhole tool or a member thereof comprising the degradable resin composition for a downhole tool or a member thereof has, due to the toughness that is represented by extremely high izod impact strength (unnotched), a high degree of shock resistance at which it is difficult to cause damage thereto even if there is contact or a collision with the various members that are used in well drilling, removal thereof is easy in the environmental conditions of a variety of wells, and can contribute to a reduction in cost and a shortening of processes of well drilling. For example, in addition to the plug (a frac plug, a bridge plug, or the like) that is illustrated in the schematic view of FIG. 1, a member that is provided in a plug, a member that is used with a plug, a ball sealer (also simply referred to as a "ball") and a ball seat can be included as examples of a downhole tool or a member thereof of the present invention. Additionally, as described above, the terms downhole tool and downhole tool member are relative concepts, and there are cases in which it is not possible to strictly establish the boundary thereof. For example, a ball sealer can be referred to as a downhole tool independently, and can also be referred to as a downhole tool member when used with a frac plug, or in combination with a ball seat inside a sleeve.

The plug that is illustrated in the schematic view of FIG. 1 will be described as a specific example of a downhole tool or a member thereof. The plug is provided with a mandrel 1, a diameter expandable circular rubber member 2, slips 3a and 3b, wedges 4a and 4b, and a pair of rings 5a and 5b. Furthermore, a ball sealer 10 and a substantially circular ball seat 12 having a circular gap in a central part thereof are provided in a hollow part h of the mandrel 1. Hereinafter, a case of implementing fracturing using the plug that is schematically illustrated in FIG. 1 will be described.

The pair of rings 5a and 5b are configured so as to be capable of sliding along an axial direction of the mandrel 1 on an outer peripheral surface of the mandrel 1 and so that a mutual space therebetween can be changed. In addition, the pair of rings 5a and 5b are configured so that a force in the axial direction of the mandrel 1 can be applied to the diameter expandable circular rubber member 2, the slips 3a and 3b, and the wedges 4a and 4b as a result of the pair of rings 5a and 5b coming into contact directly or indirectly with end parts along the axial direction of a combination of the diameter expandable circular rubber member 2, the slips 3a and 3b and the wedges 4a and 4b. The diameter expandable circular rubber member 2 expands in diameter in a direction that is orthogonal to the axial direction of the mandrel 1, abuts against an inside wall H of the downhole, and plugs (seals) a space between a plug and the downhole. The diameter expandable circular rubber member 2 can maintain the abutting state with the inside wall H of the downhole while perforation or fracturing is continually performed, and has a function of maintaining a seal between a plug and the downhole. In addition, as a result of the slips 3a and 3b sliding over the inclined upper surfaces of the wedges 4a and 4b due to a force in the axial direction of the mandrel 1 being applied to the wedges 4a and 4b, the slips 3a and 3b move outward orthogonal to the axial direction of the mandrel 1, abut against the inside wall H of the downhole, and fix the plug and the inside wall H of the downhole.

In addition, the ball sealer 10 and ball seat 12 that are provided in the hollow part h of the mandrel 1 can move along the axial direction of the mandrel 1 inside the hollow part h of the mandrel 1, and can adjust a flow direction of a fluid as a result of the ball sealer 10 abutting against or being separated from the circular gap of the ball seat 12.

Additionally, a plug (a frac plug, a bridge plug, or the like), which is the downhole tool or a member thereof of the present invention is not limited to the structure that is illustrated in the schematic view of FIG. 1. In addition, examples of the downhole tool or a member thereof of the present invention include a downhole tool or a member thereof that is selected from the group consisting of a ball sealer, a ball seat, a frac plug and a bridge plug, but may also be another downhole tool or a member thereof.

### 6. Downhole tool or downhole tool member formed from degradable resin composition

A downhole tool or a member thereof comprising a degradable resin composition containing a degradable resin and a toughness enhancing agent of the present invention refers to both i) a downhole tool or a member thereof comprising the degradable resin composition, for example, a ball sealer comprising the degradable resin composition, or a ball seat comprising the degradable resin composition, and ii) a downhole tool or a member thereof provided with a member comprising the degradable resin composition, for example, a plug (a frac plug, a bridge plug, or the like) provided with a mandrel comprising the degradable resin composition, or a plug provided with a ring comprising the degradable resin composition.

### II. Method for producing degradable resin composition for downhole tool or member thereof and downhole tool or member thereof

The method of producing the degradable resin composition for a downhole tool or a member thereof and the downhole tool or member thereof according to the present invention is not particularly limited. In the method, after mixing the degradable resin, the toughness enhancing agent, and other blended components such as the chain extender and/or reinforcing material that are contained according to necessity, in accordance with predetermined rules according to necessity so as to attain a mixed state in which the toughness enhancing agent is uniformly dispersed in the degradable resin, the mixture is supplied to a molding machine that implements various molding methods, thereby producing the downhole tool or member thereof, which is a molded product, or a preform for producing the downhole tool or member thereof. Examples of molding methods include publicly-known molding methods such as cast molding, compression molding, injection molding, extrusion molding, solidification extrusion molding, and centrifugal molding. Examples of preforms for producing the downhole tool or the member thereof include a preform with a rod-shape, a hollow shape or a plate shape that are obtained using solidification extrusion molding. It is possible to produce a ball-shaped downhole tool or a member thereof, or a downhole tool or a member thereof having a modified cross-section, which is a rod-shaped body, a hollow-shaped body or a plate-shaped body (for example, a rod-shaped body or a hollow-shaped body having portions in which the external diameter and the internal diameter differ in a length direction) by carrying out mechanical processing such as a cutting operation or perforation on the obtained preform according to necessity. Furthermore, a downhole tool or a member thereof may be produced by combining molded products obtained using these production methods using a publicly known method.

### III. Method for recovering hydrocarbon resource

The method for recovering a hydrocarbon resource of the present invention is not particularly limited as long as it is a method for recovering a hydrocarbon resource that uses the above-mentioned downhole tool or the member thereof of the present invention. As a result of using the downhole tool or a member thereof of the present invention, a method for recovering a hydrocarbon resource that, under severe and various excavation conditions such as increased depth, has sufficient tensile characteristics that has, due to the toughness that is represented by extremely high izod impact strength (unnotched), an excellent toughness at which it is difficult to cause damage even if there is contact or a collision with the various members that are used in well drilling, that facilitates removal of the tool or the member according to necessity, and that contributes to a reduction in cost and a shortening of processes of well drilling, is provided.

For example, the method for recovering a hydrocarbon resource of the present invention is a method that performs perforation or fracturing of a downhole using a downhole tool or member thereof of the present invention that is selected from the group consisting of a ball sealer, a ball seat, a frac plug and a bridge plug. In addition to having sufficient tensile characteristics, the downhole tool or a member thereof of the present invention has, due to the toughness that is represented by extremely high izod impact strength (unnotched), a high degree of shock resistance at which it is difficult to cause damage even if there is contact or a collision with the various members that are used in well drilling. A method for recovering a hydrocarbon resource in which an effect of a reduction in the cost and a shortening of the process that are required in the drilling of wells is exhibited, is thus obtained as a result of using a downhole tool or a member thereof of the present invention. Furthermore, as a result of using the downhole tool or the member thereof of the present invention, judging from the fact that it is possible to easily remove the downhole tool or the member thereof by causing the degradable resin to be degraded according to necessity by biodegradation, hydrolysis, or another method in the diverse environmental conditions of wells, a method for recovering a hydrocarbon resource in which an effect of a reduction in the cost and a shortening of the processes that are required in the drilling of wells is exhibited, is provided.

### Examples

Hereinafter, the present invention will be further described by illustrating working examples and comparative examples, but the present invention is not limited to the working examples. The materials that are contained in the degradable resin compositions for a downhole tool or a member thereof, and the measurement method of the physical properties and characteristics of the degradable resin compositions in working examples and comparative examples are as follows.

### Melt viscosity

The melt viscosities of the degradable resins that are contained in the degradable resin compositions for a downhole tool or a member thereof were measured at a temperature of 270°C, and a shear rate of 122 sec-1 using a capillograph [Capillo 1A manufactured by Toyo Seiki Seisaku-sho, Ltd.] (Unit: Pa·s).

### Izod impact strength (unnotched) and izod impact strength (notched)

The izod impact strengths (unnotched) of the degradable resin compositions for a downhole tool or a member thereof was calculated by measuring for unnotched test samples in accordance with ASTM D256 (corresponds to ISO 180) at ambient temperature using a pendulum impact test machine (manufactured by Toyo Seiki Seisaku-sho, Ltd., hammer mass: 120 kg) (average value of n = 5 Unit: J/m). The izod impact strengths (notched) were calculated by measuring for notched test samples in accordance with ASTM D256 in the same manner at ambient temperature using a pendulum impact test machine (manufactured by Ueshima Seisaku-sho Co., Ltd., hammer mass: 40 kg).

### Tensile elongation and tensile strength

The tensile elongations and the tensile strengths of the degradable resin compositions for a downhole tool or a member thereof were calculated by measuring at ambient temperature and at a rate of 50 mm/min in accordance with JIS K7113 using a 2t autograph AG-2000E manufactured by Shimadzu Corporation (average value of n = 5 Units: % and MPa).

### [Working Example 1]

After mixing the following materials; 98 mass% of a degradable resin: a PGA (manufactured by Kureha Corporation, melt viscosity 900 Pa·s) and 2 mass% of a toughness enhancing agent: a polyester-polyether block copolymer [polybutylene terephthalate-polyether block copolymer manufactured by DuPont, trade name: Hytrel (registered trademark) 3078, hereinafter, also referred to as a "toughness enhancing agent A"] (the total of the degradable resin and the toughness enhancing agent was 100 mass%), for 5 minutes at a temperature of 230°C using a single screw extruder L/D = 20/30 mm ϕ (2D25S manufactured by Toyo Seiki Seisaku-sho, Ltd.), a degradable resin composition for a downhole tool or a member thereof was obtained by preparing specimens for the measurement of physical properties and characteristics using a melt molding machine. The izod impact strength (unnotched), the izod impact strength (notched), the tensile elongation and the tensile strength (hereinafter, also collectively referred to as the "toughness and tensile characteristics") were measured and calculated for the obtained degradable resin composition. The results are shown in Table 1 along with the composition of the degradable resin composition.

### [Working Example 2]

Apart from changing the composition of the degradable resin composition to a composition that contains 96 mass% of the PGA and 4 mass% of the toughness enhancing agent A (the total of the degradable resin and the toughness enhancing agent was 100 mass%), a degradable resin composition for a downhole tool or a member thereof was obtained in the same manner as that of Working Example 1. The toughness and tensile characteristics were measured and calculated for the obtained degradable resin composition. The results are shown in Table 1 along with the composition of the degradable resin composition.

### [Working Example 3]

Apart from changing the composition of the degradable resin composition to a composition that contains 92 mass% of the PGA and 8 mass% of the toughness enhancing agent A (the total of the degradable resin and the toughness enhancing agent was 100 mass%), a degradable resin composition for a downhole tool or a member thereof was obtained in the same manner as that of Working Example 1. The toughness and tensile characteristics were measured and calculated for the obtained degradable resin composition. The results are shown in Table 1 along with the composition of the degradable resin composition.

### [Working Example 4]

Apart from changing the composition of the degradable resin composition to a composition that contains 88 mass% of the PGA and 12 mass% of the toughness enhancing agent A (the total of the degradable resin and the toughness enhancing agent was 100 mass%), a degradable resin composition for a downhole tool or a member thereof was obtained in the same manner as that of Working Example 1. The toughness and tensile characteristics were measured and calculated for the obtained degradable resin composition. The results are shown in Table 1 along with the composition of the degradable resin composition.

### [Working Example 5]

Apart from changing the composition of the degradable resin composition to a composition that contains 95.3 mass% of the PGA, 4 mass% of the toughness enhancing agent A, and 0.7 mass % of a chain extender (1,3-PBO, manufactured by Mikuni Pharmaceutical Industrial Co., Ltd., hereinafter, also referred to as a "chain extender a") (the total of the degradable resin, the toughness enhancing agent and the chain extender was 100 mass%), a degradable resin composition for a downhole tool or a member thereof was obtained in the same manner as that of Working Example 1. The toughness and tensile characteristics were measured and calculated for the obtained degradable resin composition. The results are shown in Table 1 along with the composition of the degradable resin composition.

### [Working Example 6]

Apart from changing the composition of the degradable resin composition to a composition that contains 86.5 mass% of the PGA, 12 mass% of the toughness enhancing agent A, and 1.5 mass % of the chain extender a (the total of the degradable resin, the toughness enhancing agent and the chain extender was 100 mass%), a degradable resin composition for a downhole tool or a member thereof was obtained in the same manner as that of Working Example 1. The toughness and tensile characteristics were measured and calculated for the obtained degradable resin composition. The results are shown in Table 1 along with the composition of the degradable resin composition.

### [Working Example 7]

Apart from changing the composition of the degradable resin composition to a composition that contains 87.7 mass% of the PGA, 12 mass% of a toughness enhancing agent: an aromatic polyester-aliphatic polyester block copolymer [trade name: Pelprene (registered trademark) S type 1001 manufactured by Toyobo Co., Ltd., hereinafter, also referred to as a "toughness enhancing agent B"], and 0.3 mass % of a chain extender: XDI (hereinafter, also referred to as a "chain extender b") (the total of the degradable resin, the toughness enhancing agent and the chain extender was 100 mass%), a degradable resin composition for a downhole tool or a member thereof was obtained in the same manner as that of Working Example 1. The toughness and tensile characteristics were measured and calculated for the obtained degradable resin composition. The results are shown in Table 1 along with the composition of the degradable resin composition.

### [Comparative Example 1]

Apart from changing the composition of the degradable resin composition to a composition comprising 100 mass% of the PGA (that does not contain a toughness enhancing agent or a chain extender), a degradable resin composition was obtained in the same manner as that of Working Example 1. The toughness and tensile characteristics were measured and calculated for the obtained degradable resin composition. The results are shown in Table 1 along with the composition of the degradable resin composition.

### [Comparative Example 2]

Apart from changing the composition of the degradable resin composition to a composition that contains 99.3 mass% of the PGA and 0.7 mass% of the chain extender a (not contain a toughness enhancing agent, the total of the degradable resin and the chain extender was 100 mass%), a degradable resin composition was obtained in the same manner as that of Working Example 1. The toughness and tensile characteristics were measured and calculated for the obtained degradable resin composition. The results are shown in Table 1 along with the composition of the degradable resin composition.

### [Comparative Example 3]

Apart from changing the composition of the degradable resin composition to a composition that contains 95.9 mass% of the PGA, 4 mass% of the toughness enhancing agent A, and 0.1 mass% of the chain extender b (the total of the degradable resin, the toughness enhancing agent and the chain extender was 100 mass%), a degradable resin composition for a downhole tool or a member thereof was obtained in the same manner as that of Working Example 1. The toughness and tensile characteristics were measured and calculated for the obtained degradable resin composition. The results are shown in Table 1 along with the composition of the degradable resin composition.

### [Comparative Example 4]

Apart from changing the composition of the degradable resin composition to a composition that contains 95.7 mass% of the PGA, 4 mass% of a toughness enhancing agent A, and 0.3 mass% of the chain extender b (the total of the degradable resin, the toughness enhancing agent and the chain extender was 100 mass%), a degradable resin composition for a downhole tool or a member thereof was obtained in the same manner as that of Working Example 1. The toughness and tensile characteristics were measured and calculated for the obtained degradable resin composition. The results are shown in Table 1 along with the composition of the degradable resin composition.

### [Comparative Example 5]

Apart from changing the composition of the degradable resin composition to a composition that contains 96 mass% of the PGA and 4 mass% of the toughness enhancing agent B (the total of the degradable resin and the toughness enhancing agent was 100 mass%, not contain a chain extender), a degradable resin composition for a downhole tool or a member thereof was obtained in the same manner as that of Working Example 7. The toughness and tensile characteristics were measured and calculated for the obtained degradable resin composition. The results are shown in Table 1 along with the composition of the degradable resin composition.

**Table 1-3**

| | | | Working Example 1 | Working Example 2 | Working Example 3 | Working Example 4 | Working Example 5 | Working Example 6 | Working Example 7 | Comparative Example 1 | Comparative Example 2 | Comparative Example 3 | Comparative Example 4 | Comparative Example 5 |
|---|---|---|---|---|---|---|---|---|---|---|---|---|---|---|
| Composition | Degradable Resin | (mass%) | 98 | 96 | 92 | 88 | 87.7 | 100 | 99.3 | 95.9 | 95.7 | 96 | 95.3 | 86.5 |
| | Toughness Enhancing Agent | Type | A | A | A | A | B | - | - | A | A | B | A | A |
| | | (mass%) | 2 | 4 | 8 | 12 | 12 | - | - | 4 | 4 | 4 | 4 | 12 |
| | Chain Extender | Type | - | - | - | - | b | - | a | b | b | - | a | a |
| | | (mass%) | - | - | - | - | 0.3 | - | 0.7 | 0.1 | 0.3 | - | 0.7 | 1.5 |
| Mechanical Properties | Izod Impact Strength (Unnotched) | (J/m) | 1200 | 1400 | 1650 | 1770 | 1520 | 360 | 765 | 873 | 791 | 804 | 1950 | 1750 |
| | Izod Impact Strength (Notched) | (J/m) | 31 | 37 | 41 | 43 | 45 | 25 | 49 | 39 | 39 | 37 | 66 | 90 |
| | Tensile Elongation | (%) | 18 | 36 | 25 | 25 | 3 | 5 | 3 | 3 | 3 | 3 | 7 | 6 |
| | Tensile strength | (MPa) | 110 | 100 | 100 | 90 | 100 | 120 | 125 | 110 | 110 | 110 | 125 | 120 |

It was confirmed using Table 1 that the degradable resin compositions for a downhole tool or a member thereof of Working Examples 1 to 7 contain 60 to 99.9 mass% of the degradable resin and 0.1 to 40 mass% of the toughness enhancing agents when a total of the degradable resin and the toughness enhancing agent is set as 100 mass%, and have izod impact strengths (unnotched) of 1,000 J/m or more, a tensile elongation of 3% or more, and a tensile strength of 30 MPa or more. It was discovered that the sizes of the izod impact strengths (unnotched) of the degradable resin composition for a downhole tool or a member thereof of Working Examples 1 to 7 were 19.4 to 41.2 times the sizes of the izod impact strengths (notched), and were 3.3 to 5.4 times that of Comparative Example 1, which did not contain a toughness enhancing agent. Therefore, according to the degradable resin compositions for a downhole tool or a member thereof of Working Examples 1 to 7, it is possible to obtain a downhole tool or a member thereof comprising a degradable resin composition of the present invention containing a degradable resin and a toughness enhancing agent, in which the degradable resin composition has an izod impact strength (unnotched) of 1,000 J/m or more, a tensile elongation of 3% or more, and a tensile strength of 30 MPa or more. As a result of this, it is assumed that, under severe and various excavation conditions such as increased depth, an effect of having sufficient mechanical strength, having, due to the toughness that is represented by extremely high izod impact strength (unnotched), a high degree of shock resistance at which it is difficult to cause damage even if there is contact or a collision with the various members that are used in well drilling, removal being easy in the environmental conditions of a variety of wells, and contributing to a reduction in cost and a shortening of processes of well drilling, is exhibited.

In particular, the degradable resin compositions for a downhole tool or a member thereof of Working Examples 5 to 7 are degradable resin compositions for a downhole tool or a member thereof that further contain a chain extender, and contain 60 mass% or more and less than 98.8 mass% of the degradable resin, more than 1 mass% and 37 mass% or less of the toughness enhancing agent, and 0.2 mass% or more and 3 mass% or less of the chain extender when a total of the degradable resin, the toughness enhancing agent and the chain extender is set as 100 mass%. These degradable resin compositions have mechanical properties with particularly excellent balance due to the facts that the izod impact strengths (unnotched) thereof are extremely large at over 1,500 J/m, the izod impact strengths (notched) thereof are 45 J/m or more, the tensile elongation is 3% or more and the tensile strength is 100 MPa or more. According to the degradable resin compositions for a downhole tool or a member thereof of Working Examples 5 to 7, judging from the fact that downhole tools or members thereof comprising the degradable resin compositions have mechanical properties with particularly excellent balance. As a result of this, it is assumed that, under severe and various excavation conditions such as increased depth, an effect of having a high degree of shock resistance at which it is difficult to cause damage even if there is contact or a collision with the various members that are used in well drilling, removal being easy in the environmental conditions of a variety of wells, and contributing to a reduction in cost and a shortening of processes of well drilling, is exhibited.

In contrast to this, it was confirmed that the izod impact strengths (unnotched) of degradable resin compositions of Comparative Examples 1 and 2 which did not contain a toughness enhancing agent, were small values of 360 J/m and 765 J/m. According to the degradable resin compositions of Comparative Examples 1 and 2, it is not possible to obtain the downhole tool or the member thereof of the present invention, that is, a downhole tool or a member thereof comprising a degradable resin composition containing a degradable resin and a toughness enhancing agent, in which the degradable resin composition has an izod impact strength (unnotched) of 1,000 J/m or more, a tensile elongation of 3% or more, and a tensile strength of 30 MPa or more. Accordingly, it is assumed that the downhole tool or the member thereof comprising the degradable resin compositions of Comparative Examples 1 and 2 has poor toughness, and that there is a concern that damage or destruction thereof will occur in a case of coming into contact with or colliding with the various members that are used in well drilling.

In addition, the toughness of downhole tools or members thereof of Comparative Examples 3 to 5 comprising degradable resin compositions in which the izod impact strength (unnotched) is not 1,000 J/m or more, is poor, although the degradable resin compositions contain a degradable resin and a toughness enhancing agent. Thus, there is a concern that damage or destruction thereof will occur in a case of coming into contact with or colliding with the various members that are used in well drilling. As a result of this, it is assumed that the downhole tool or a member thereof cannot have sufficient mechanical properties under severe and various excavation conditions such as increased depth.

### Industrial Applicability

The present invention is a downhole tool or a member thereof comprising a degradable resin composition containing a degradable resin and a toughness enhancing agent, in which the degradable resin composition has an izod impact strength (unnotched) of 1,000 J/m or more, a tensile elongation of 3% or more, and a tensile strength of 30 MPa or more. As a result of the downhole tool or a member thereof, it is possible to provide a downhole tool or a member thereof used in a method for recovering a hydrocarbon resource that, under severe and various excavation conditions such as increased depth, has sufficient mechanical strength, has, due to the toughness that is represented by extremely high izod impact strength (unnotched), a high degree of shock resistance at which it is difficult to cause damage thereto even if there is contact or a collision with the various members that are used in well drilling, that facilitates removal of the tool or the member in the environmental conditions of a variety of wells, and contributes to a reduction in cost and a shortening of processes of well drilling. Therefore, the industrial applicability thereof is high.

In addition, according to the present invention, a degradable resin composition for a downhole tool or a member thereof containing 60 to 99.9 mass% of a degradable resin and 0.1 to 40 mass% of a toughness enhancing agent when the total of the degradable resin and the toughness enhancing agent is set as 100 mass%, in which the degradable resin composition has an izod impact strength (unnotched) of 1,000 J/m or more, a tensile elongation of 3% or more, and a tensile strength of 30 MPa or more. As a result of the degradable resin composition for a downhole tool or a member thereof, it is possible to provide a degradable resin composition for a downhole tool or a member thereof from which it is easily possible to obtain the downhole tool or downhole tool member. Therefore, the industrial applicability thereof is high.

In addition, as a result of the present invention being a method for recovering a hydrocarbon resource using the downhole tool or member thereof, it is possible to provide a method for recovering a hydrocarbon resource that, under severe and various excavation conditions such as increased depth, has sufficient mechanical strength has, due to the toughness that is represented by extremely high izod impact strength (unnotched), a high degree of shock resistance at which it is difficult to cause damage even if there is contact or a collision with the various members that are used in well drilling, that facilitates removal of the tool or the member in the environmental conditions of a variety of wells, and that contributes to a reduction in cost and a shortening of processes of well drilling. Therefore, the industrial applicability thereof is high.

### Reference Signs List

- 1:: Mandrel
- 2:: Diameter expandable circular rubber member
- 3a, 3b:: Slip
- 4a, 4b:: Wedge
- 5a, 5b:: Ring
- 10:: Ball (ball sealer)
- 12:: Ball seat
- H:: Inside wall of downhole
- h:: Hollow part of mandrel

## Claims

1. A downhole tool or a downhole tool member comprising a degradable resin composition containing a degradable resin and a toughness enhancing agent,
the degradable resin composition having an izod impact strength (unnotched) of 1,000 J/m or more, a tensile elongation of 3% or more, and a tensile strength of 30 MPa or more.

2. The downhole tool or downhole tool member according to claim 1,
wherein, the downhole tool or downhole tool member contains a degradable resin composition containing 60 to 99.9 mass% of the degradable resin and 0.1 to 40 mass% of the toughness enhancing agent when a total of the degradable resin and the toughness enhancing agent is set as 100 mass%.

3. The downhole tool or downhole tool member according to claims 1 or 2,
further comprising a chain extender wherein, the downhole tool or downhole tool member contains a degradable resin composition containing 60 mass% or more and less than 98.8 mass% of the degradable resin, more than 1 mass% and 37 mass% or less of the toughness enhancing agent, and 0.2 mass% or more and 3 mass% or less of the chain extender when a total of the degradable resin, the toughness enhancing agent and the chain extender is set as 100 mass%.

4. The downhole tool or downhole tool member according to any one of claims 1 to 3, further comprising a reinforcing material,
wherein, the downhole tool or downhole tool member contains a degradable resin composition containing 60 mass% or more and less than 94 mass% of the degradable resin, more than 1 mass% and 30 mass% or less of the toughness enhancing agent, and 5 mass% or more and 39 mass% or less of the reinforcing material when a total of the degradable resin, the toughness enhancing agent and the reinforcing material is set as 100 mass%.

5. The downhole tool or downhole tool member according to any one of claims 1 to 4,
wherein the downhole tool or downhole tool member is selected from the group consisting of a ball sealer, a ball seat, a frac plug and a bridge plug.

6. A degradable resin composition for a downhole tool or a downhole tool member, the degradable resin composition comprising 60 to 99.9 mass% of a degradable resin and 0.1 to 40 mass% of a toughness enhancing agent when a total of the degradable resin and the toughness enhancing agent is set as 100 mass%,
the degradable resin composition having an izod impact strength (unnotched) of 1,000 J/m or more, a tensile elongation of 3% or more, and a tensile strength of 30 MPa or more.

7. The degradable resin composition for a downhole tool or a downhole tool member according to claim 6,
wherein the degradable resin is an aliphatic polyester.

8. The degradable resin composition for a downhole tool or a downhole tool member according to claims 6 or 7,
wherein the degradable resin is a polyglycolic acid.

9. The degradable resin composition for a downhole tool or a downhole tool member according to any one of claims 6 to 8,
wherein the toughness enhancing agent contains a thermoplastic elastomer.

10. The degradable resin composition for a downhole tool or a downhole tool member according to claim 9,
wherein the thermoplastic elastomer is a thermoplastic polyester elastomer.

11. The degradable resin composition for a downhole tool or a downhole tool member according to claim 10,
wherein the thermoplastic polyester elastomer is a polyester-polyether block copolymer or an aromatic polyester-aliphatic polyester block copolymer.

12. The degradable resin composition for a downhole tool or a downhole tool member according to any one of claims 6 or 11,
further comprising a chain extender wherein, the degradable resin composition for a downhole tool or a downhole tool member contains 60 mass% or more and less than 98.8 mass% of the degradable resin, more than 1 mass% and 37 mass% or less of the toughness enhancing agent, and 0.2 mass% or more and 3 mass% or less of the chain extender when a total of the degradable resin, the toughness enhancing agent and the chain extender is set as 100 mass%.

13. The degradable resin composition for a downhole tool or a downhole tool member according to any one of claims 6 to 12,
further comprising a reinforcing material,
wherein the degradable resin composition for a downhole tool or a downhole tool member contains 60 mass% or more and less than 94 mass% of the degradable resin, more than 1 mass% and 30 mass% or less of the toughness enhancing agent, and 5 mass% or more and 39 mass% or less of the reinforcing material when a total of the degradable resin, the toughness enhancing agent and the reinforcing material is set as 100 mass%.

14. A method for recovering a hydrocarbon resource using the downhole tool or downhole tool member according to any one of claims 1 to 5.
